(19) Europäisches Patentamt
European Patent Office
Office européen des brevets

(11) **EP 3 321 650 B1**

(12) **EUROPEAN PATENT SPECIFICATION**

(45) Date of publication and mention
of the grant of the patent:
**09.12.2020  Bulletin 2020/50**

(51) Int Cl.:
***G01J 3/45*** (2006.01)      ***G01B 9/02*** (2006.01)

(21) Application number: **15897747.0**

(86) International application number:
**PCT/JP2015/069949**

(22) Date of filing: **10.07.2015**

(87) International publication number:
**WO 2017/006486 (12.01.2017 Gazette 2017/02)**

(54) **OPTICAL INTERFEROMETER**

OPTISCHES INTERFEROMETER

INTERFÉROMÈTRE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.07.2015   JP 2015134967**

(43) Date of publication of application:
**16.05.2018   Bulletin 2018/20**

(73) Proprietor: **Hamamatsu Photonics K.K.**
**Hamamatsu-shi, Shizuoka 435-8558 (JP)**

(72) Inventors:
• **WARASHINA, Yoshihisa**
**Hamamatsu-shi, Shizuoka 435-8558 (JP)**
• **SUZUKI, Tomofumi**
**Hamamatsu-shi, Shizuoka 435-8558 (JP)**
• **KASAMORI, Kohei**
**Hamamatsu-shi, Shizuoka 435-8558 (JP)**
• **OKUMURA, Ryosuke**
**Hamamatsu-shi, Shizuoka 435-8558 (JP)**
• **KOTANI, Kyosuke**
**Hamamatsu-shi, Shizuoka 435-8558 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/025691        JP-A- S63 241 306**
**JP-A- S63 241 435        JP-A- 2013 504 066**
**US-A- 3 551 054        US-A1- 2014 098 371**
**US-B1- 6 233 054        US-B1- 6 233 054**
**US-B1- 7 633 624**

# Description

## Technical Field

The present invention relates to a MEMS-based optical interferometer.

## Background Art

Patent Documents 1 to 12 disclose inventions of the optical interferometers. Further, Patent Documents 1, 2, and 4 to 7 in these documents disclose inventions of MEMS (Micro Electro-Mechanical System)-based optical interferometers which can be minimized easily.

An optical interferometer disclosed in Patent Document 1 uses a branching-combining unit made of, for example, silicon to partially reflect incident light on one plane of the branching-combining unit, and transmit the rest of the incident light through the plane, to branch the light into first branched light and second branched light, and combine the first branched light and the second branched light and output as combined light. That is, the optical interferometer commonly uses one plane of the branching-combining unit as the branching surface for branching the incident light into the first branched light and the second branched light and the combining surface for combining the first branched light and the second branched light to form the combined light. Further, in the optical interferometer disclosed in this document, wavelength dispersion occurs when one light of the first branched light and the second branched light reciprocates in the branching-combining unit, and to eliminate the wavelength dispersion, the other light is made to reciprocate in a dispersion compensating member.

An optical interferometer disclosed in Patent Document 8 uses a branching-combining unit made of, for example, silicon to partially reflect incident light on a first principal surface of the branching-combining unit, and transmit the rest of the incident light through the surface, to branch the light into first branched light and second branched light, and combine the first branched light and the second branched light on a second principal surface of the branching-combining unit and output as combined light. That is, the optical interferometer uses different surfaces of the branching surface (first principal surface) for branching the incident light into the first branched light and the second branched light and the combining surface (second principal surface) for combining the first branched light and the second branched light to form the combined light. The optical interferometer disclosed in this document can decrease the wavelength dispersion, because each of the first branched light and the second branched light passes through the branching-combining unit only once.

## Citation List

### Patent Literature

Patent Document 1: Japanese Patent Application Laid-Open Publication No. 2013-504066
Patent Document 2: Japanese Patent Publication No. 5204450
Patent Document 3: Japanese Patent Application Laid-Open Publication No. 2005-3572
Patent Document 4: Japanese Patent Application Laid-Open Publication No. 2008-102132
Patent Document 5: Japanese Patent Application Laid-Open Publication No. 2008-503732
Patent Document 6: Japanese Patent Application Laid-Open Publication No. 2010-170029
Patent Document 7: Japanese Patent Application Laid-Open Publication No. 2013-522600
Patent Document 8: Japanese Patent Application Laid-Open Publication No. H3-77029
Patent Document 9: Japanese Examined Patent Publication No. H7-23856
Patent Document 10: Japanese Patent Application Laid-Open Publication No. H7-139906
Patent Document 11: Japanese Patent Application Laid-Open Publication No. S60-11123
Patent Document 12: Japanese Patent Application Laid-Open Publication No. S61-195317

US 2014/0098371 A1 describes a spectrometer with improved resolution including a spectral domain modulator having a periodic response in the spectral domain to modulate a wideband source spectrum and cause one or more shifted bursts in the interferogram.

US 6,233,054 B1 describes a beamsplitter for a double beam interferometer with the interferometer and beamsplitter being designed to provide suppression of the interferometer's self emissions by optical subtraction. The beamsplitter is formed of two flat transparent substrates having balanced transmission characteristics at the wavelengths of interest. These substrates are superposed and mounted next to each other with a thin layer of air squeezed between adjacent flat surfaces of the substrates. A temperature sensor on a mount in which the beamsplitter is installed allows for simplified radiometric calibration of the interferometer.

US 3,551,054 describes an interferometer for the testing of radiation-transparent articles which has a solid body with at least one pair of orthogonally adjoining reflecting surfaces from which a bundle of light rays received from an input beam splitter are directed onto and received back from two orthogonally adjoining mirrors respectively confronting these surfaces in parallel relationship therewith. The rays of this bundle are then combined with those of a second bundle, also generated by the input beam splitter, in an output beam splitter to provide a coincidence pattern indicative of the optical characteristics of a test object placed in one of the ray paths; the path of the second ray bundle may include a second pair of reflecting surfaces on the solid body. The two mirrors may be limitedly and independently swingable about different axes to vary the pattern. Alternatively, the test object may be positioned with its plane of symmetry bisecting the angles included by these mirrors and by the confronting reflecting surfaces whereby the same light rays traverse respective halves of the object in opposite directions.

## Summary of Invention

### Technical Problem

Inventors of the present invention have found that the conventional optical interferometers disclosed in Patent Document 1 and the like have the following problem.

That is, the optical interferometer disclosed in Patent Document 1 shows a large light loss from branching to combining, because there are many interfaces between the branching-combining unit (e.g., silicon) and a surrounding medium (usually air). The light loss may decrease when an antireflection film is formed on a specific interface, however, as the MEMS-based optical interferometer is small, it is difficult to selectively form the antireflection film on the specific interface and decrease the light loss.

The optical interferometer disclosed in Patent Document 8 shows a small light loss from branching to combining because the number of interfaces between the branching-combining unit and a surrounding medium is lower than that of the optical interferometer disclosed in Patent Document 1. However, the interference efficiency is low in the optical interferometer disclosed in Patent Document 8.

Conventional techniques including those disclosed in other Patent Documents are not able to decrease the light loss and improve the interference efficiency in the MEMS-based optical interferometer.

The present invention has been made in order to solve the above problem, and an object thereof is to provide a MEMS-based optical interferometer capable of decreasing the light loss from branching to combining and improving the interference efficiency.

### Solution to Problem

The present invention provides an optical interferometer as set out in claim 1.

### Advantageous Effects of Invention

The present invention can provide a MEMS-based optical interferometer capable of decreasing the light loss from branching to combining and improving the interference efficiency.

## Brief Description of Drawings

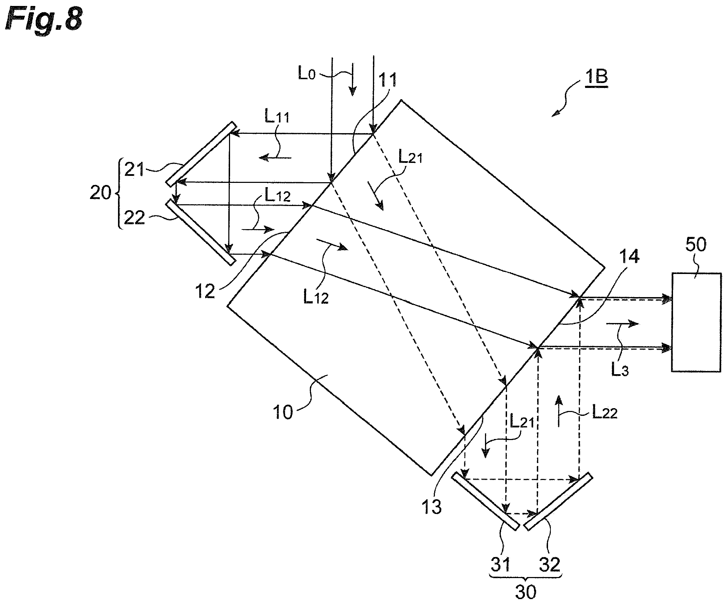

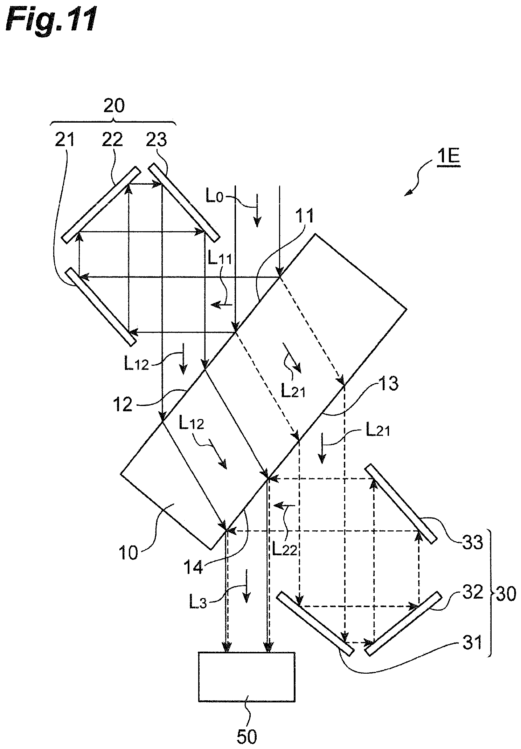

Figures 8 and 11 show embodiments of the present invention. The other figures show further examples which are not encompassed in the scope of the invention, even if they are named "embodiments" in the corresponding parts of the description. The scope of protection is defined by the claims.

[FIG. 1] FIG. 1 is a diagram illustrating a configuration of an optical interferometer 2A of a first comparative example.
[FIG 2] FIG 2 is a diagram illustrating a configuration of an optical interferometer 2B of a second comparative example.
[FIG 3] FIG 3 is a diagram illustrating a configuration of an optical interferometer 1A of a first example.
[FIG 4] FIG 4 is a diagram illustrating a configuration example of a first optical system 20 of the optical interferometer 1A of the first example.
[FIG. 5] FIG. 5 is a diagram illustrating a configuration example of the first optical system 20 of the optical interferometer 1A of the first example.
[FIG. 6] FIG. 6 is a diagram illustrating a configuration example of the first optical system 20 of the optical interferometer 1A of the first example.
[FIG. 7] FIG. 7 is a diagram for explaining the number of mirrors included in the first optical system 20 and the second optical system 30 of the optical interferometer 1A of the first example.
[FIG 8] FIG 8 is a diagram illustrating a configuration of an optical interferometer 1B of an embodiment.
[FIG. 9] FIG. 9 is a diagram illustrating a configuration of an optical interferometer 1C of a third example.
[FIG. 10] FIG. 10 is a diagram illustrating a configuration of an optical interferometer 1D of an example.
[FIG. 11] FIG. 11 is a diagram illustrating a configuration of an optical interferometer 1E of an embodiment.
[FIG 12] FIG 12 is a diagram illustrating a configuration of an optical interferometer IF of an example.

## Description of Embodiments

Hereinafter, embodiments for carrying out the present invention will be described in detail with reference to the accompanying drawings. In the description of the drawings, the same or equivalent elements will be denoted by the same reference signs, without redundant description. The present invention is not limited to these examples, and the Claims, their equivalents, and all the changes within the scope are intended as would fall within the scope of the present invention.

Before describing optical interferometers of the embodiments, optical interferometers of comparative examples to be compared with the embodiments are described. An optical interferometer 2A of the first comparative example is similar to that disclosed in Patent Document 1. An optical interferometer 2B of the second comparative example is similar to that disclosed in Patent Document 8.

(First Comparative Example)

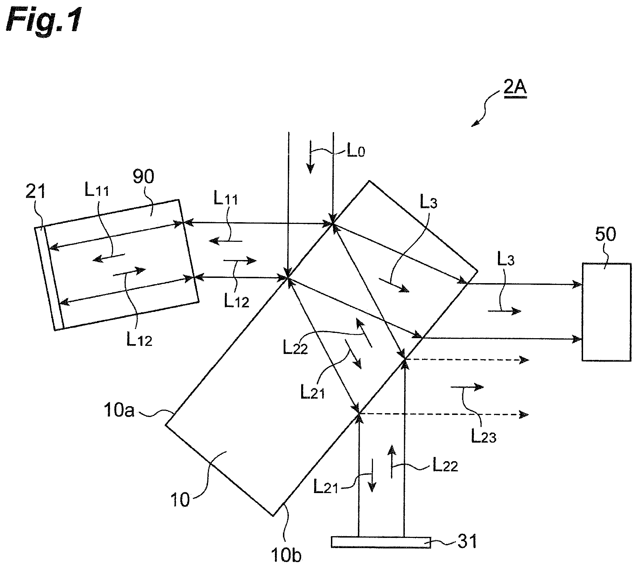

FIG. 1 is a diagram illustrating a configuration of an optical interferometer 2A of a first comparative example. The optical interferometer 2A includes a branching-combining unit 10, a mirror 21, a mirror 31, and a dispersion compensating member 90, which are MEMS-based components.

The branching-combining unit 10 is made of, for example, silicon and has a first principal surface 10a and a second principal surface 10b which are parallel to each other. Incident light $L_0$ that enters from the outside to the first principal surface 10a is partially reflected as first branched light $L_{11}$, and the rest of the incident light transmits into the interior of the branching-combining unit 10 as second branched light $L_{21}$.

The first branched light $L_{11}$ from the first principal surface 10a passes through the interior of the dispersion compensating member 90 and is reflected by the mirror 21. The first branched light $L_{12}$ reflected by the mirror 21 passes through the interior of the dispersion compensating member 90 again, enters the first principal surface 10a, and transmits into the interior of the branching-combining unit 10.

The second branched light $L_{21}$ from the first principal surface 10a passes through the interior of the branching-combining unit 10, transmits through the second principal surface 10b to be output to the outside, and is reflected by the mirror 31. The second branched light $L_{22}$ reflected by the mirror 31 enters the second principal surface 10b, transmits into the interior of the branching-combining unit 10, passes through the interior of the branching-combining unit 10 again, and is reflected by the first principal surface 10a.

The first branched light $L_{12}$ transmitted into the interior of the branching-combining unit 10 on the first principal surface 10a and the second branched light $L_{22}$ reflected on the first principal surface 10a are combined to form combined light $L_3$. The combined light $L_3$ passes through the interior of the branching-combining unit 10, and transmits through the second principal surface 10b to be output to the outside. The combined light $L_3$ output to the outside is detected by a detection unit 50.

In the optical interferometer 2A, the first principal surface 10a of the branching-combining unit 10 is used as both the branching surface for branching the incident light $L_0$ into the first branched light $L_{11}$ and the second branched light $L_{21}$, and the combining surface for combining the first branched light $L_{12}$ and the second branched light $L_{22}$ into the combined light $L_3$.

For example, the position of the mirror 21 is fixed and the mirror 31 is movable by a drive unit along the incident direction of the second branched light $L_{21}$. The drive unit can also be configured by a MEMS-based component. Since the mirror 31 is movable, the optical path difference between the first branched light and the second branched light is adjustable.

In the optical interferometer 2A, the branching-combining unit 10 and the dispersion compensating member 90 are made of the same material (e.g., silicon). Further, the optical path length of a section where the first branched light $L_{11}$, $L_{12}$ reciprocates in the dispersion compensating member 90 is set to be equal to the optical path length of a section where the second branched light $L_{21}$, $L_{22}$ reciprocates in the branching-combining unit 10. This eliminates the problem of wavelength dispersion and decreases wavelength dependency of the optical path difference between the first branched light and the second branched light.

The optical interferometer 2A shows a problem described below because of many interfaces. Here, the branching-combining unit 10 and the dispersion compensating member 90 are made of silicon (refractive index 3.5), a surrounding medium is air (refractive index 1.0), and an incident angle of the incident light $L_0$ to the first principal surface 10a is 45 degrees. The reflectance of light at the interface of silicon and air is 30%, and the transmittance is 70%. Here, precisely, the reflectance and the transmittance vary for S-waves and P-waves, however, incoherent light is expected to have polarization directions distributed randomly, so that the average value is taken to set the reflectance of 30% and the transmittance of 70%. Further, the mirrors 21 and 31 are assumed to have the reflectance of light of 100%.

A ratio $R_1$ of the incident light $L_0$ that reaches the detection unit 50 via the first branched light is calculated as a product of the reflectance (0.3) on the first principal surface 10a, the transmittance (0.7) from the air to the dispersion compensating member 90, the reflectance (1.0) on the mirror 21, the transmittance (0.7) from the dispersion compensating member 90 to the air, the transmittance (0.7) from the exterior to the interior on the first principal surface 10a, and the transmittance (0.7) from the interior to the exterior on the second principal surface 10b, and thus, the ratio is 7.2%.

A ratio $R_2$ of the incident light $L_0$ that reaches the detection unit 50 via the second branched light is calculated as a product of the transmittance (0.7) from the exterior to the interior on the first principal surface 10a, the transmittance (0.7) from the interior to the exterior on the second principal surface 10b, the reflectance (1.0) on the mirror 31, the transmittance (0.7) from the exterior to the interior on the second principal surface 10b, the reflectance (0.3) on the first principal surface 10a, and the transmittance (0.7) from the interior to the exterior on the second principal surface 10b, and thus, the ratio is 7.2%.

An interference intensity peak $I_{pp}$ of the combined light $L_3$ is 14.4% by the formula represented by $I_{pp} = 2\sqrt{(R_1 \cdot R_2)}$.

Here, the reflection of light on the interface between the dispersion compensating member 90 and the air and the reflection of light on the second principal surface 10b are entirely the excessive loss. When an antireflection film is formed on these surfaces, the interference intensity peak $I_{pp}$ of the combined light $L_3$ is 42%. That is, the excessive loss of 27.6% occurs.

However, it is difficult to form such an antireflection film selectively on the specific interface, as the size of the MEMS-based optical interferometer 2A is small. The excessive loss is inevitable as long as the MEMS-based optical interferometer is used.

Further, the optical interferometer 2A has another problem, because the second branched light $L_{22}$ entering the second principal surface 10b is partially reflected. As illustrated in FIG. 1, the second branched light $L_{23}$, which is part of the second branched light $L_{22}$ entering the second principal surface 10b from the mirror 31 and reflected by the second principal surface 10b, propagates in the same direction as the combined light $L_3$ which is output to the outside from the second principal surface 10b. Actually, the combined light $L_3$ and the second branched light $L_{22}$ each have a certain beam width. If the detection unit 50 partially detects the second branched light $L_{23}$ reflected by the second principal surface 10b, the detection accuracy of the detection unit 50 to detect the interference intensity of the combined light $L_3$ decreases. In particular, when the light is not collimated light but diverging light, the detection accuracy of the interference intensity of the combined light $L_3$ by the detection unit 50 further decreases.

To prevent such decrease of the detection accuracy of the interference intensity, it is necessary to increase a distance between the first principal surface 10a and the second principal surface 10b of the branching-combining unit 10 to sufficiently separate the optical path of the second branched light $L_{23}$ which is reflected by the second principal surface 10b from the optical path of the combined light $L_3$. This, however, increases the optical path length of the incident light $L_0$ when it is branched to make the combined light $L_3$ and reaches the detection unit 50, and thus, a loss is generated.

(Second Comparative Example)

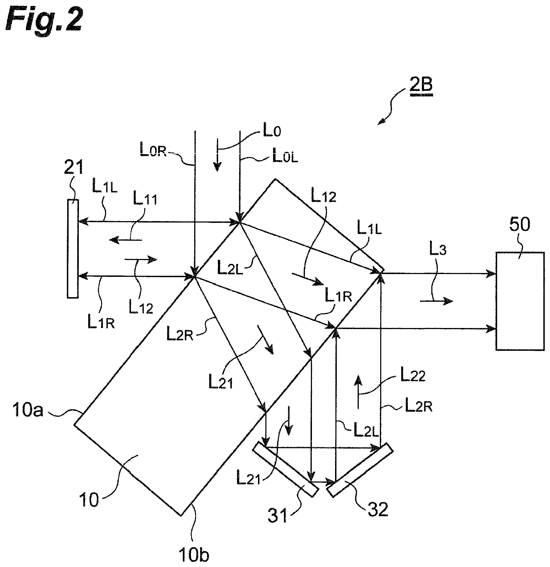

FIG. 2 is a diagram illustrating a configuration of an optical interferometer 2B of a second comparative example. The optical interferometer 2B includes a branching-combining unit 10, a mirror 21, a mirror 31, and a mirror 32.

The branching-combining unit 10 is made of, for example, silicon and has a first principal surface 10a and a second principal surface 10b which are parallel to each other. Incident light $L_0$ that enters from the outside to the first principal surface 10a is partially reflected as first branched light $L_{11}$, and the rest of the incident light transmits into the interior of the branching-combining unit 10 as second branched light $L_{21}$.

The first branched light $L_{11}$ from the first principal surface 10a is reflected by the mirror 21. The first branched light $L_{12}$ reflected by the mirror 21 enters the first principal surface 10a, transmits into the interior of the branching-combining unit 10, passes through the interior of the branching-combining unit 10, and transmits through the second principal surface 10b to be output to the outside.

The second branched light $L_{21}$ from the first principal surface 10a passes through the interior of the branching-combining unit 10, transmits through the second principal surface 10b to be output to the outside, is reflected by the mirror 31, and is reflected again by the mirror 32. The second branched light $L_{22}$ reflected by the mirrors 31 and 32 enters the second principal surface 10b and is reflected.

The first branched light $L_{12}$ output to the outside on the second principal surface 10b and the second branched light $L_{22}$ reflected on the second principal surface 10b are combined to form combined light $L_3$. The combined light $L_3$ is detected by a detection unit 50.

The optical interferometer 2B uses separate surfaces for the branching surface (first principal surface 10a) to branch the incident light $L_0$ into the first branched light $L_{11}$ and the second branched light $L_{21}$ and for the combining surface (second principal surface 10b) to combine the first branched light $L_{12}$ and the second branched light $L_{22}$ to form the combined light $L_3$.

For example, the position of the mirror 21 is fixed, and the mirrors 31 and 32 are movable by a drive unit along the incident direction of the second branched light $L_{21}$. The drive unit can also be configured by a MEMS-based component. Since the mirrors 31 and 32 are movable, the optical path difference between the first branched light and the second branched light is adjustable.

The optical interferometer 2B of the second comparative example allows the first branched light and the second branched light to pass through the interior of the branching-combining unit 10 only once, thus preventing the problem of wavelength dispersion without using the dispersion compensating member 90, which is required in the optical interferometer 2A of the first comparative example.

The optical interferometer 2B of the second comparative example gives a smaller excessive loss due to the interfaces, as there are less interfaces between the branching-combining unit 10 and the surrounding medium, when compared to the optical interferometer 2A of the first comparative example. However, the optical interferometer 2B has a problem described below.

In the optical interferometer 2B, the branching surface (first principal surface 10a) is different from the combining surface (second principal surface 10b), so that the first branched light is reflected by the single mirror 21 and the second branched light is reflected by the two mirrors 31 and 32 to combine the first branched light and the second branched light on the combining surface. By reflecting the second branched light by the two mirrors 31 and 32, the reflecting position (combining position) of the second branched light on the second principal surface 10b differs from the output position of the second branched light from the interior to the exterior on the second principal surface 10b, and further, coincides with the output position of the first branched light from the interior to the exterior on the second principal surface 10b.

Here, consider light rays $L_{0R}$ and $L_{0L}$ that pass through two different positions in the beam cross-section of the incident light $L_0$. The two light rays $L_{0R}$ and $L_{0L}$ of the incident light $L_0$ propagate through different paths within a plane that is parallel to both the normal line of the first principal surface 10a and the incident direction of the incident light $L_0$. Assume that, in the first branched light $L_{11}$, $L_{12}$, a light ray $L_{1R}$ is derived from one light ray $L_{0R}$ of the incident light $L_0$, and a light ray $L_{1L}$ is derived from the other light ray $L_{0L}$ of the incident light $L_0$. Assume that, in the second branched light $L_{21}$, $L_{22}$, a light ray $L_{2R}$ is derived from one light ray $L_{0R}$ of the incident light $L_0$, and a light ray $L_{2L}$ is derived from the other light ray $L_{0L}$ of the incident light $L_0$.

At this time, on the combining surface (second principal surface 10b), the light ray $L_{1R}$ of the first branched light derived from the one light ray $L_{0R}$ of the incident light $L_0$ is combined with the light ray $L_{2L}$ of the second branched light derived from the other light ray $L_{0L}$ of the incident light $L_0$. Further, the light ray $L_{1L}$ of the first branched light derived from the other light ray $L_{0L}$ of the incident light $L_0$ is combined with the light ray $L_{2R}$ of the second branched light derived from the one light ray $L_{0R}$ of the incident light $L_0$.

That is, when the light rays of the first branched light and the second branched light reaching each position of the combining surface (second principal surface 10b) are derived from different light rays of the incident light, these light rays do not form normal interference light even though the light rays are combined to form the combined light. On the other hand, when the incident light $L_0$ is given as a light ray formed by expanding and collimating a single light ray of, for example, a point light source, the light rays of the first branched light and the second branched light reaching each position may interfere with each other, however, the quality of the interference signal may decrease, because the optical path difference is generated by a spatial distance between the light ray L1R and the light ray L1L in the beam cross-section of the first branched light.

Normally, the optical interferometer is expected to have the same optical path difference between the first branched light and the second branched light that reach the respective positions as the optical path difference adjusted by the movement of mirrors. However, in the beam width range provided in the optical interferometer 2B, the optical path difference changes between the beam which is closer to the center and the beam which is closer to the edge portion, whereby an observed interference signal is averaged and weakened as a whole.

An optical interferometer used in FTIR (Fourier Transform Infrared Spectroscopy) uses light having a large beam diameter in order to increase a parallel nature of the propagating light. As a result, the light includes many beams having different optical path differences, and thus the optical interferometer 2B that uses the combined light beams at different positions as the interference signal has an intrinsic problem with respect to interference.

(First Example)

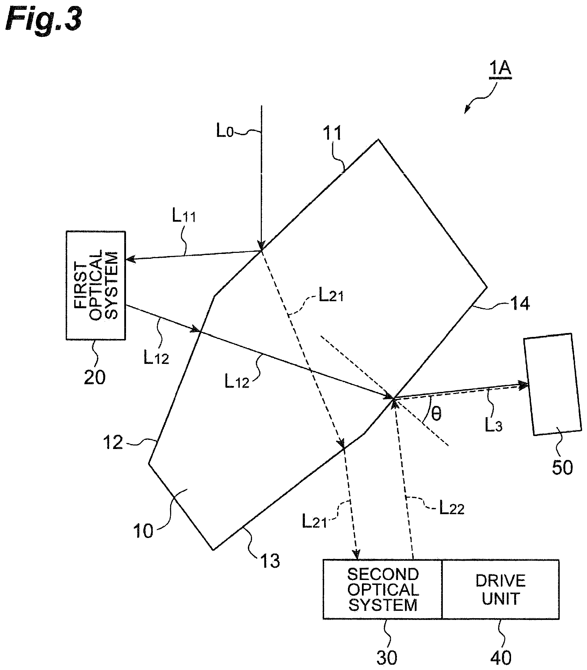

FIG. 3 is a diagram illustrating a configuration of an optical interferometer 1A of a first example. The configuration of the optical interferometer 1A is generalized for explanation. The optical interferometer 1A includes a branching-combining unit 10, a first optical system 20, a second optical system 30, and a drive unit 40, which can be configured by MEMS-based components.

The branching-combining unit 10 is made of a transparent member of a semiconductor, such as silicon, and has a branching surface 11, an incident surface 12, an output surface 13, and a combining surface 14 on interfaces between the interior and the exterior of the transparent member.

The branching-combining unit 10, on the branching surface 11, partially reflects incident light $L_0$ that enters from the outside and outputs as first branched light $L_{11}$, and transmits the rest of the incident light into the interior as second branched light $L_{21}$. The branching-combining unit 10, on the incident surface 12, transmits the first branched light $L_{12}$ that enters from the branching surface 11 via the first optical system 20 into the interior.

The branching-combining unit 10, on the output surface 13, outputs the second branched light $L_{21}$ that reaches from the branching surface 11 through the interior to the outside. The branching-combining unit 10, on the combining surface 14, outputs the first branched light $L_{12}$ that reaches from the incident surface 12 through the interior to the outside, reflects the second branched light $L_{22}$ that enters from the output surface 13 via the second optical system 30, and combines the first branched light $L_{12}$ and the second branched light $L_{22}$ to be output to the outside as combined light $L_3$.

The first optical system 20 reflects the first branched light $L_{11}$ output from the branching surface 11 by one or a plurality of mirrors, and directs the reflected first branched light $L_{12}$ to the incident surface 12. The second optical system 30 reflects the second branched light $L_{21}$ output from the output surface 13 by one or a plurality of mirrors, and directs the reflected second branched light $L_{22}$ to the combining surface 14. The drive unit 40 moves any of the mirrors of the first optical system 20 or the second optical system 30 to adjust an optical path difference between the first branched light and the second branched light from the branching surface 11 to the combining surface 14.

The incident light $L_0$ that enters the branching surface 11 from the outside is partially reflected as the first branched light $L_{11}$, and the rest of the incident light transmits into the interior of the branching-combining unit 10 as the second branched light $L_{21}$.

The first branched light $L_{11}$ from the branching surface 11 is reflected by one or a plurality of mirrors of the first optical system 20. The reflected first branched light $L_{12}$ enters the incident surface 12, transmits into the interior of the branching-combining unit 10, passes through the interior of the branching-combining unit 10, and transmits through the combining surface 14 to be output to the outside.

The second branched light $L_{21}$ from the branching surface 11 passes through the interior of the branching-combining unit 10, transmits through the output surface 13 to be output to the outside, and is reflected by one or a plurality of mirrors of the second optical system 30. The reflected second branched light $L_{22}$ enters the combining surface 14 and is reflected.

The first branched light $L_{12}$ output to the outside on the combining surface 14 and the second branched light $L_{22}$ reflected on the combining surface 14 are combined to form combined light $L_3$. The combined light $L_3$ is detected by a detection unit 50.

Assume that a refractive index of the branching-combining unit 10 is $n_1$ and a refractive index of a surrounding medium is $n_2$. The reflectance R of light on each surface of the branching-combining unit 10 is represented by the following formula (1), and the transmittance T of light is represented by the following formula (2). Here, precisely, the reflectance changes depending on the incident angle and the polarization direction of light, however, when the incident light is from an incoherent light source, the polarization directions are randomly distributed, and when the incident angle is expected to be equal to or smaller than Brewster's angle, total reflectance and transmittance are approximately equal to the formula (1) and the formula (2). When the branching-combining unit 10 is made of silicon (refractive index 3.5) and the surrounding medium is air (refractive index 1.0), the reflectance R of light is 30% and the transmittance T is 70% on each surface of the branching-combining unit 10. A branching ratio of the branching surface 11 as a beam splitter is 3:7. Assume that the reflectance of light in the first optical system 20 and the second optical system 30 is 100%.

$$R = \{(n_1 - n_2) / (n_1 + n_2)\}^2 \quad \dots (1)$$

$$T = 1 - R \quad \dots (2)$$

A ratio $R_1$ of the incident light $L_0$ that reaches the detection unit 50 via the first branched light is calculated as a product of the reflectance (0.3) on the branching surface 11, the reflectance (1.0) in the first optical system 20, the transmittance (0.7) on the incident surface 12, and the transmittance (0.7) on the combining surface 14, and thus, the ratio is 14.7%.

A ratio $R_2$ of the incident light L0 that reaches the detection unit 50 via the second branched light is calculated as a product of the transmittance (0.7) on the branching surface 11, the transmittance (0.7) on the output surface 13, the reflectance (1.0) in the second optical system 30, and the reflectance (0.3) on the combining surface 14, and thus, the ratio is 14.7%.

An interference intensity peak $I_{pp}$ of the combined light L3 is 29.4% by the formula represented by $I_{pp} = 2\sqrt{(R_1 \cdot R_2)}$. The interference intensity peak of the combined light $L_3$ of the present example is larger than that of the first comparative example. An excessive loss is only the reflections of light on the incident surface 12 and the output surface 13.

The present example can decrease the optical path length to reach the detection unit 50, when the thickness of the branching-combining unit 10 is about the same as the thickness of that in the first comparative example. Further, unlike the first comparative example, the present example does not require an increase in thickness of the branching-combining unit 10 to consider the beam expansion of the light. This is because the second branched light $L_{22}$ reflected on the combining surface 14 is combined with the first branched light $L_{12}$ to form the combined light $L_3$ and not to form stray light.

The directions of the branching surface 11, the incident surface 12, the output surface 13, and the combining surface 14 of the branching-combining unit 10 and the light incident positions and the incident angles on the respective surfaces are set appropriately according to the refractive indexes of the branching-combining unit 10 and the surrounding medium, so that the first branched light and the second branched light are combined coaxially on the combining surface 14 and output to the outside as the combined light $L_3$ at the same output angle θ.

The branching surface 11 and the combining surface 14 are provided separately. The branching surface 11 and the incident surface 12 may not be parallel to each other, may be parallel to each other, and may be provided on a common plane. An incident region of the incident light $L_0$ on the branching surface 11 and an incident region of the first branched light $L_{12}$ on the incident surface 12 may be different or may coincide with each other partially or entirely. The output surface 13 and the combining surface 14 are parallel to each other, and are provided on a common plane. An output region of the second branched light $L_{21}$ on the output surface 13 and an output region of the combined light $L_3$ on the combining surface 14 may be different or may coincide with each other partially or entirely.

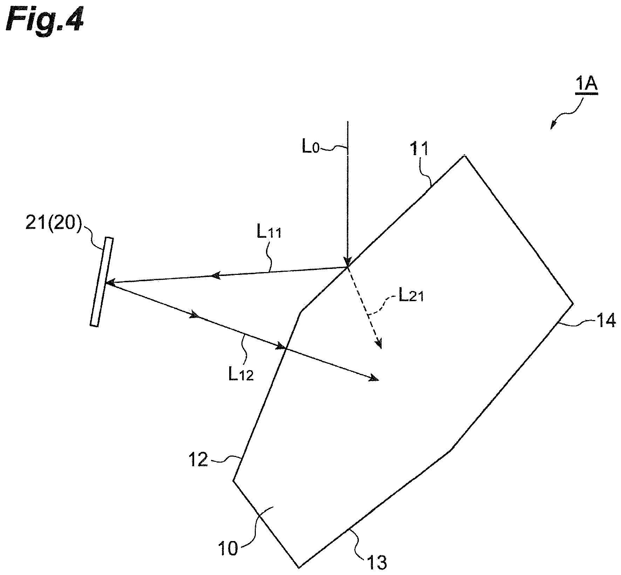

FIG. 4 to FIG. 6 are diagrams illustrating configuration examples of the first optical system 20 of the optical interferometer 1A of the first example. The following description of the first optical system 20 can be similarly applied to the second optical system 30.

In the configuration example illustrated in FIG. 4, the first optical system 20 includes a single mirror 21. The mirror 21 reflects the first combined light $L_{11}$, which is reflected by the branching surface 11 of the branching-combining unit 10 and output in a predetermined direction (hereinafter referred to as "output direction"), and then directs the reflected first branched light $L_{12}$ to the incident surface 12 of the branching-combining unit 10 in a predetermined direction (hereinafter referred to as "incident direction").

This configuration example can be used when the output direction intersects with the incident direction, and the mirror 21 reflects the first branched light at the position of the intersection point. When, however, the output direction and the incident direction intersect with each other, and the position of the intersection point is located far from the branching-combining unit 10, the optical path length of the first branched light is long and a loss is generated due to the beam expansion and the like of the first branched light, and therefore, the next configuration example will be preferable.

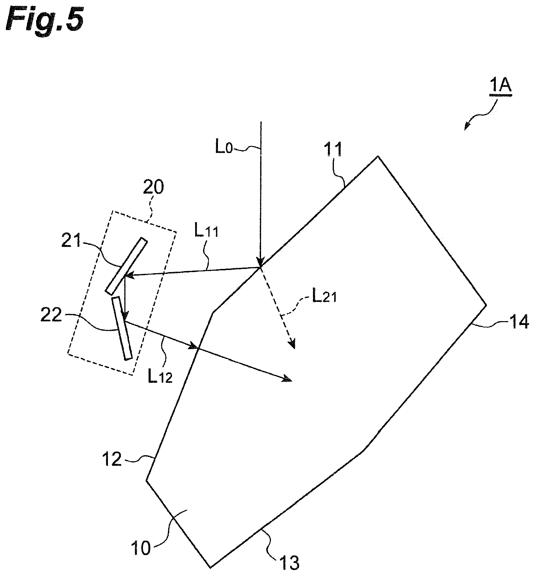

In the configuration example illustrated in FIG. 5, the first optical system 20 includes two mirrors 21 and 22. The first branched light $L_{11}$, which is reflected by the branching surface 11 of the branching-combining unit 10 and output in the predetermined direction (output direction), is reflected sequentially by the mirrors 21 and 22. The reflected first branched light $L_{12}$ enters the incident surface 12 of the branching-combining unit 10 in the predetermined direction (incident direction).

In this configuration example, the reflection surfaces of the mirror 21 and the mirror 22 are perpendicular to each other, when the output direction and the incident direction of the first branched light are parallel to each other. By moving the mirrors 21 and 22 as a unit by the drive unit in the direction parallel to the incident direction and the output direction, the optical path length of the first branched light can be adjusted without changing the incident position of the first branched light $L_{12}$ on the incident surface 12.

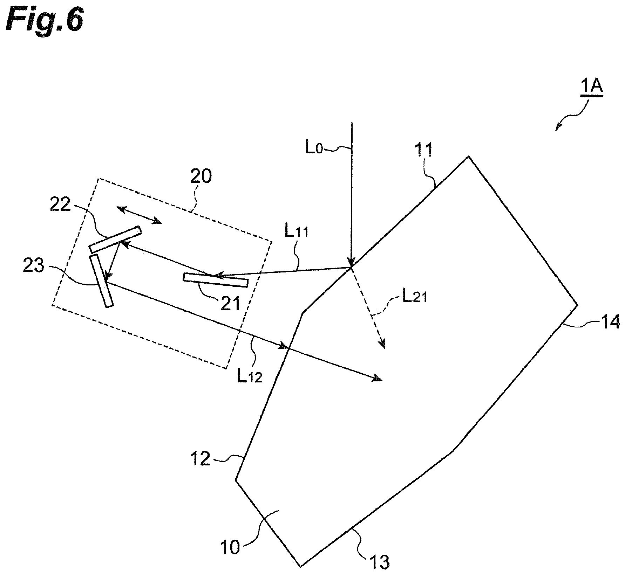

In the configuration example illustrated in FIG. 6, the first optical system 20 includes three mirrors 21 to 23. The first branched light $L_{11}$, which is reflected by the branching surface 11 of the branching-combining unit 10 and output in the predetermined direction (output direction), is reflected sequentially by the mirrors 21 to 23. The reflected first branched light $L_{12}$ enters the incident surface 12 of the branching-combining unit 10 in the predetermined direction (incident direction).

In this configuration example, the reflection surfaces of the mirror 22 and the mirror 23 are perpendicular to each other. The optical path of the first branched light from the mirror 21 to the mirror 22 is parallel to the optical path of the first branched light from the mirror 23 to the incident surface 12. Therefore, by moving the mirrors 22 and 23 as a unit by the drive unit in the direction (incident direction) indicated by a double-headed arrow in FIG. 6, the optical path length of the first branched light can be adjusted without changing the incident position of the first branched light $L_{12}$ on the incident surface 12.

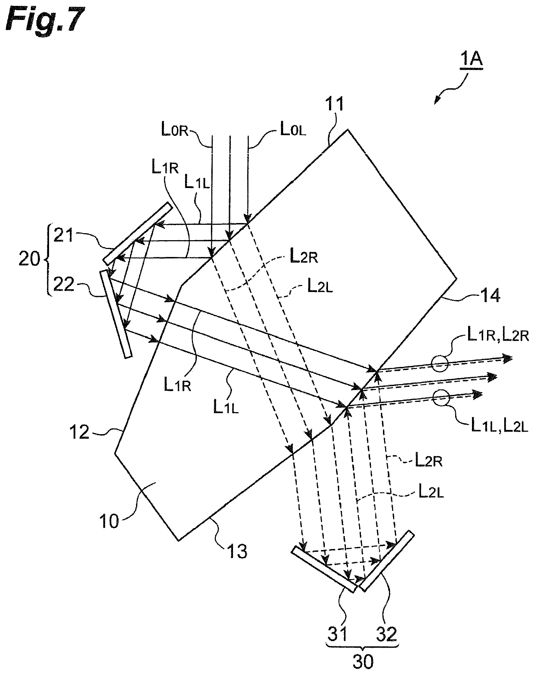

In the following, the number of mirrors included in the first optical system 20 and the second optical system 30 is described. FIG. 7 is a diagram for explaining the number of mirrors included in the first optical system 20 and the second optical system 30 of the optical interferometer 1A of the first example. In FIG. 7, the first optical system 20 includes two mirrors 21 and 22, and the second optical system 30 includes two mirrors 31 and 32.

Further, in FIG. 7, consider light rays $L_{0R}$ and $L_{0L}$ that pass through two different positions in the beam cross-section of the incident light $L_0$. The two light rays $L_{0R}$ and $L_{0L}$ of the incident light $L_0$ propagate through different paths within a plane that is parallel to both the normal line of the branching surface 11 and the incident direction of the incident light $L_0$. Assume that, in the first branched light $L_{11}$, $L_{12}$, a light ray $L_{1R}$ is derived from one light ray $L_{0R}$ of the incident light $L_0$, and a light ray $L_{1L}$ is derived from the other light ray $L_{0L}$ of the incident light $L_0$. Assume that, in the second branched light $L_{21}$, $L_{22}$, a light ray $L_{2R}$ is derived from one light ray $L_{0R}$ of the incident light $L_0$, and a light ray $L_{2L}$ is derived from the other light ray $L_{0L}$ of the incident light $L_0$.

Generally, the positions of left and right light rays switch every time the light is reflected by the mirror. In the configuration of FIG. 7, the first branched light is reflected twice in the first optical system 20, and the second branched light is reflected twice in the second optical system 30. As a result, the light rays of the first branched light and the second branched light that reach each position of the combining surface 14 are derived from the same light ray in the incident light, so that the light rays can interfere with each other efficiently.

Generally, when the total number of the mirrors in the first optical system 20 and the mirrors in the second optical systems 30 is an even number, the light ray at each position in the beam cross-section of the incident light $L_0$ is branched on the branching surface 11, and then the light rays are combined at a common position in the beam cross-section of the combined light $L_3$ on the combining surface 14, and thus, the efficient interference light can be obtained. In contrast, the interference efficiency decreases when the total number of the mirrors in the first optical system 20 and the mirrors in the second optical systems 30 is an odd number.

A relationship of the branching surface 11, the incident surface 12, the output surface 13, and the combining surface 14 of the branching-combining unit 10 is described below. Generally, when the branching-combining unit 10 is made with a material such as a semiconductor material, the optical path length (= geometric length multiplied by refractive index) of light when the light passes through the branching-combining unit 10 varies depending on the wavelength, because the refractive index of the material varies depending on the wavelength, and thus, wavelength dispersion occurs.

The wavelength dispersion can be compensated for over the entire wavelengths by equalizing propagating distances of the first branched light and the second branched light through the interior of the branching-combining unit 10. Further, by considering that each of the first branched light and the second branched light has a beam width, it is desirable to equalize the propagating distances of the light rays at respective positions in the beam cross-section of the first branched light and the second combined light through the interior of the branching-combining unit 10. That is, it is desirable that the branching surface 11 and the output surface 13 are parallel to each other, and the incident surface 12 and the combining surface 14 are parallel to each other. It is also desirable that a distance between the branching surface 11 and the output surface 13 is equal to a distance between the incident surface 12 and the combining surface 14.

Further, it is desirable that the optical path length of the first branched light from the branching surface 11 to the incident surface 12 via the first optical system 20 coincides with the optical path length of the second branched light from the output surface 13 to the combining surface 14 via the second optical system 30 with respect to the light rays at respective positions in the beam cross-section. That is, it is desirable that the branching surface 11 and the incident surface 12 are parallel to each other, and provided on a common plane. It is desirable that the output surface 13 and the combining surface 14 are parallel to each other, and provided on a common plane. Further, it is desirable that each of the first optical system 20 and the second optical system 30 includes two mirrors disposed such that reflection surfaces of the mirrors are arranged perpendicular to each other.

Embodiments described below have desirable configurations in consideration of the above matters.

(Second Example)

FIG. 8 is a diagram illustrating a configuration of an optical interferometer 1B of a second example. In the optical interferometer 1B, a branching surface 11 and an incident surface 12 are provided on a common plane but at different regions. An output surface 13 and a combining surface 14 are provided on a common plane but at different regions. The branching surface 11 and the incident surface 12, and the output surface 13 and the combining surface 14 are parallel to each other. The present example can completely compensate for the wavelength dispersion.

A first optical system 20 includes two mirrors 21 and 22 disposed such that the reflection surfaces of the mirrors are perpendicular to each other. The first optical system 20 reflects first branched light $L_{11}$, which is reflected by the branching surface 11, by the mirrors 21 and 22 sequentially, and directs the light as first branched light $L_{12}$ to the incident surface 12. The first branched light $L_{12}$ entering the incident surface 12 is parallel to the

first branched light $L_{11}$ reflected by the branching surface 11 and propagates in the opposite direction, and enters a position on the incident surface 12 which is different from the reflecting position on the branching surface 11.

A second optical system 30 includes two mirrors 31 and 32 disposed such that the reflection surfaces of the mirrors are perpendicular to each other. The second optical system 30 reflects second branched light $L_{21}$, which is output to the outside from the output surface 13, by the mirrors 31 and 32 sequentially, and directs the light as second branched light $L_{22}$ to the combining surface 14. The second branched light $L_{22}$ entering the combining surface 14 is parallel to the second branched light $L_{21}$ output from the output surface 13 and propagates in the opposite direction, and enters a position on the combining surface 14 which is different from the output position on the output surface 13.

By driving both or one of the first optical system 20 and the second optical system 30 by the drive unit 40, the optical path difference between the first branched light and the second branched light can be adjusted. For example, to adjust the optical path length of the first branched light, the two mirrors 21 and 22 in the first optical system 20 are moved as a unit in the direction parallel to the reflecting direction of the first branched light $L_{11}$ from the branching surface 11.

(Third Example)

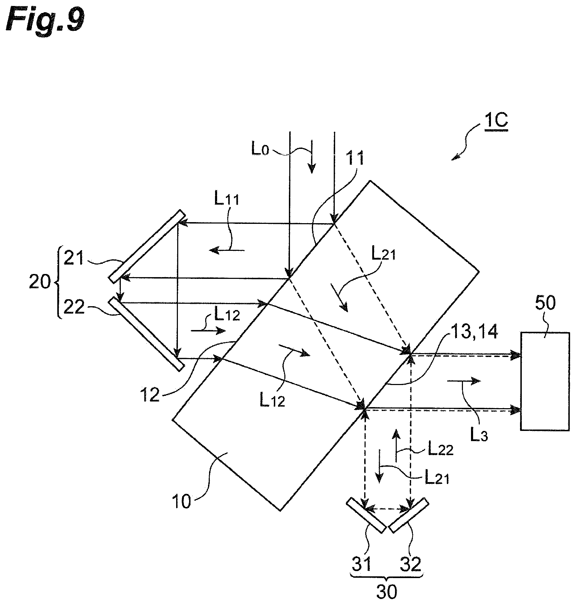

FIG. 9 is a diagram illustrating a configuration of an optical interferometer 1C of a third example. The optical interferometer 1C of the third example illustrated in FIG. 9 differs from the configuration of the optical interferometer 1B of the second example illustrated in FIG. 8 in that the output surface 13 and the combining surface 14 are a common surface. This configuration is achieved by appropriately setting the thickness of the branching-combining unit 10.

An output region of the second branched light $L_{21}$ on the output surface 13 and an output region of the combined light $L_3$ on the combining surface 14 coincide with each other. The second branched light $L_{21}$ propagating from the branching-combining unit 10 to the mirror 31 propagates in the opposite direction to the second branched light $L_{22}$ propagating from the mirror 32 to the branching-combining unit 10, and further, both beams are overlapped.

As compared to the configuration of the optical interferometer 1B of the second example illustrated in FIG. 8, the optical interferometer 1C of the third example illustrated in FIG. 9 can decrease the optical path length of each of the first branched light and the second branched light, whereby beam expansion that cannot be ignored in practice can be minimized.

Here, although the second branched light $L_{21}$ is partially reflected by the output surface 13 and propagates in the direction opposite to the propagating path of the first branched light, such light does not turn into stray light for the combined light $L_3$ and causes no influence.

(First Embodiment)

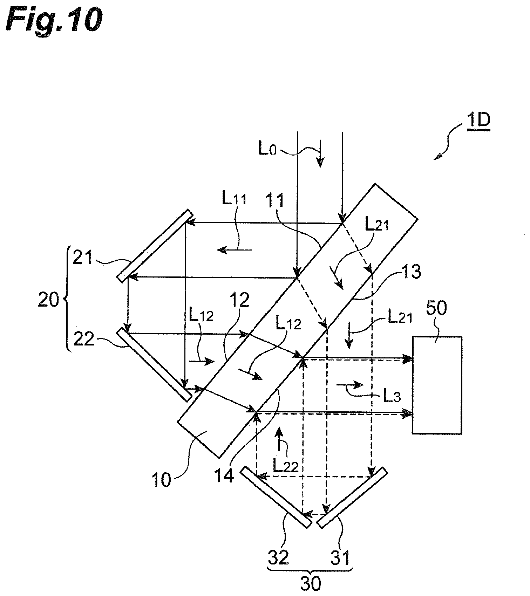

FIG. 10 is a diagram illustrating a configuration of an optical interferometer 1D of a first embodiment. The optical interferometer 1D of the first embodiment illustrated in FIG. 10 differs from the configuration of the optical interferometer 1B of the second example illustrated in FIG. 8 in that the arrangement of the output surface 13 and the combining surface 14 is reversed in the branching-combining unit 10. This configuration is achieved by decreasing the thickness of the branching-combining unit 10.

In the present embodiment, a Fabry-Perot effect by both principal surfaces of the branching-combining unit 10 appears when the thickness of branching-combining unit 10 is excessively decreased, and therefore, the thickness of the branching-combining unit 10 is set to an extent such that the Fabry-Perot effect can be prevented. Preferably, the second branched light reflected by the output surface 13 does not overlap the second branched light on the branching surface 11. In this case, the first branched light reflected by the combining surface 14 does not overlap the first branched light on the incident surface 12.

Further, in this embodiment, it is necessary to set such that the second branched light (hereinafter referred to as "reflected second branched light") which is reflected by the output surface 13 and transmits through the branching surface 11 does not enter the mirror 21, or the optical path length of the reflected second branched light is equal to or larger than the movable distance of the mirrors 21 and 22. When even a partial beam of the reflected second branched light enters the mirror 21, the beam is combined with the combined light $L_3$. At this time, when there is an optical path difference equal to or larger than the movable distance of the mirrors 21 and 22 between the reflected second branched light and the usual combined light $L_3$, an interference peak by the reflected second branched light occurs outside the movable distance of the mirrors 21 and 22, and does not affect the interference observation. Needless to say, no problem occurs when the reflected second branched light does not enter the mirror 21.

(Second Embodiment)

FIG. 11 is a diagram illustrating a configuration of an optical interferometer 1E of a second embodiment. The optical interferometer 1E of the first embodiment illustrated in FIG 11 differs from the configuration of the optical interferometer 1D of the first embodiment illustrated in FIG. 10 in that the first optical system 20 includes three mirrors 21 to 23 and the second optical system 30 includes three mirrors 31 to 33.

In the first optical system 20, the reflection surface of the mirror 21 and the reflection surface of the mirror 22 are perpendicular to each other, and the reflection surface of the mirror 22 and the reflection surface of the mirror 23 are also perpendicular to each other. The first optical system 20 reflects the first branched light $L_{11}$ reflected by the branching surface 11 by the mirrors 21 to 23 sequentially. In the second optical system 30, the reflection surface of the mirror 31 and the reflection surface of the mirror 32 are perpendicular to each other, and the reflection surface of the mirror 32 and the reflection surface of the mirror 33 are also perpendicular to each other. The second optical system 30 reflects the second branched light $L_{21}$ output from the output surface 13 by the mirrors 31 to 33 sequentially. In the branching combining unit 10, the first branched light $L_{12}$ and the second branched light $L_{21}$ propagate in parallel to each other. The combined light $L_3$ and the incident light $L_0$ propagate in parallel to each other.

(Third Embodiment)

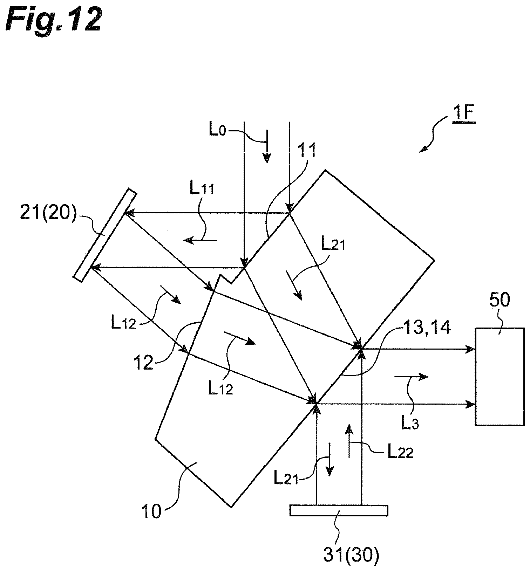

FIG. 12 is a diagram illustrating a configuration of an optical interferometer IF of a third embodiment. In the optical interferometer 1F, the first optical system 20 includes a single mirror 21, the second optical system 30 includes a single mirror 31, the branching surface 11 and the incident surface 12 are not parallel to each other, and the output surface 13 and the combining surface 14 are a common surface.

In the present embodiment, each of the first optical system 20 and the second optical system 30 includes a single mirror, so that the optical path length of each of the first branched light and the second branched light can be shortened. Therefore, the optical interferometer can be smaller in the case where the expansion of the light beam cannot be ignored, so that the light loss can be decreased.

The optical interferometer according to the present invention is not limited to the embodiments and configuration examples described above, and various modifications can be made. For example, another embodiment of the optical interferometer may reverse the light propagating direction as compared to each of the above embodiments, and even in this case, can operate as an optical interferometer.

An optical interferometer of the above-described embodiment includes a MEMS-based branching-combining unit, a first optical system, a second optical system, and a drive unit. The branching-combining unit includes a branching surface, an incident surface, an output surface, and a combining surface on interfaces between the interior and the exterior of a transparent member, the branching surface and the combining surface are provided separately, the branching surface partially reflects incident light entering from the outside and outputs as first branched light, and transmits the rest of the incident light into the interior as second branched light, the incident surface transmits the first branched light entering from the branching surface via the first optical system into the interior, the output surface outputs the second branched light reaching from the branching surface through the interior to the outside, and the combining surface outputs the first branched light reaching from the incident surface through the interior to the outside, reflects the second branched light entering from the output surface via the second optical system, and combines the first branched light and the second branched light to be output to the outside as combined light. The first optical system reflects the first branched light output from the branching surface by one or a plurality of mirrors, and directs the light to the incident surface. The second optical system reflects the second branched light output from the output surface by one or a plurality of mirrors, and directs the light to the combining surface. The drive unit moves any of the mirrors of the first optical system or the second optical system to adjust a difference between optical path lengths of the first branched light and the second branched light from the branching surface to the combining surface. Further, in the optical interferometer of the above-described embodiment, the total number of the mirrors in the first optical system and the mirrors in the second optical system is an even number, and the optical interferometer branches a light ray at each position in a beam cross-section of the incident light on the branching surface, and then combines the light rays at a common position in a beam cross-section of the combined light on the combining surface.

Preferably, in the optical interferometer of the above-described configuration, the first branched light and the second branched light have the same optical path length in the branching-combining unit. Further, in the optical interferometer, the branching surface and the output surface of the branching-combining unit are parallel to each other. Further, in the optical interferometer, the incident surface and the combining surface of the branching-combining unit are parallel to each other.

Preferably, in the optical interferometer of the above-described configuration, the branching surface and the incident surface of the branching-combining unit are parallel to each other. Further, preferably, in the optical interferometer, the branching surface and the incident surface of the branching-combining unit are on a common plane. Further, preferably, in the optical interferometer, an incident region of the incident light on the branching surface and an incident region of the first combined light on the incident surface of the branching-combining unit coincide with each other.

In the optical interferometer of the above-described configuration, the output surface and the combining surface of the branching-combining unit are parallel to each other. Further, in the optical interferometer, the output surface and the combining surface of the branching-combining unit are on a common plane. Further, preferably, in the optical interferometer, an output region of the second branched light on the output surface and an output region of the combined light on the combining surface of the branching-combining unit coincide with each other.

The optical interferometer of the above-described configuration may further include a detection unit for detecting the combined light output from the combining surface of the branching-combining unit to the outside.

## Industrial Applicability

The present invention can be used as a MEMS-based optical interferometer capable of decreasing the light loss from branching to combining and improving the interference efficiency.

## Reference Signs List

1A - 1F - optical interferometer, 10 - branching-combining unit, 11 - branching surface, 12 - incident surface, 13 - output surface, 14 - combining surface, 20 - first optical system, 21 - 23 - mirror, 30 - second optical system, 31 - 33 - mirror, 40 - drive unit, 50 - detection unit, 90 - dispersion compensating member, $L_0$ - incident light, $L_{11}$, $L_{12}$ - first branched light, $L_{21}$, $L_{22}$ - second branched light, $L_3$ - combined light.

## Claims

1.   An optical interferometer (1B, 1E) comprising a MEMS-based branching-combining unit (10); a MEMS-based first optical system (20); a MEMS-based second optical system (30); and a MEMS-based drive unit (40), the optical interferometer (1B) being for use in Fourier transform infrared spectroscopy in which light having a predetermined beam diameter is used, wherein

     the branching-combining unit (10) includes a branching surface (11), an incident surface (12), an output surface (13), and a combining surface (14) on an interface between the interior and the exterior of a transparent member,
     the branching surface (11) and the combining surface (14) are provided separately,
     the branching surface (11) and the incident surface (12) are provided on a common first plane of the transparent member, the output surface (13) and the combining surface (14) are provided on a common second plane of the transparent member, and the first plane and the second plane are parallel to each other,
     the branching surface (11) partially reflects incident light ($L_0$) entering from the outside and outputs as first branched light ($L_{11}$), and transmits the rest of the incident light into the interior as second branched light ($L_{21}$),
     the incident surface (12) transmits the first branched light ($L_{11}$, $L_{12}$) entering from the

branching surface (11) via the first optical system (20) into the interior,

the output surface (13) outputs the second branched light ($L_{21}$) reaching from the branching surface (11) through the interior to the outside,

the combining surface (14) outputs the first branched light ($L_{12}$) reaching from the incident surface (12) through the interior to the outside, reflects the second branched light ($L_{22}$) entering from the output surface via the second optical system, and combines the first branched light ($L_{12}$) and the second branched light ($L_{22}$) to be output to the outside as combined light ($L_3$), and

a thickness of the branching-combining unit (10) is set such that no light ray in a beam cross-section of the second branched light reflected by the output surface (13) overlaps with a light ray in a beam cross-section of the second branched light on the branching surface (11),

the first optical system (20) reflects the first branched light ($L_{11}$) output from the branching surface (11) by one or a plurality of mirrors, and directs the light ($L_{12}$) to the incident surface (12),

the second optical system (30) reflects the second branched light ($L_{21}$) output from the output surface (13) by one or a plurality of mirrors, and directs the light ($L_{22}$) to the combining surface (14),

the drive unit (40) is adapted to move any of the mirrors of the first optical system (20) or the second optical system (30) to adjust an optical path difference between the first branched light ($L_{11}$, $L_{12}$) and the second branched light ($L_{21}$, $L_{22}$) from the branching surface (11) to the combining surface (14),

the total number of the mirrors in the first optical system (20) and the mirrors in the second optical system (30) is an even number, and

the optical interferometer (1) branches a light ray at each position in a beam cross-section of the incident light ($L_0$) on the branching surface (11), and then combines the light rays at a common position in a beam cross-section of the combined light on the combining surface (14).

2. The optical interferometer (1B, 1E) according to Claim 1, wherein the first branched light ($L_{11}$, $L_{12}$) and the second branched light ($L_{11}$, $L_{12}$) have the same optical path length in the branching-combining unit (10).

3. The optical interferometer (1B, 1E) according to Claim 1 or 2, wherein an incident region of the incident light ($L_0$) on the branching surface (11) and an incident region of the first branched light ($L_{12}$) on the incident surface (12) of the branching-combining unit (10) coincide with each other.

4. The optical interferometer (1B, 1E) according to any one of Claims 1 to 3, wherein an output region of the second branched light ($L_{21}$) on the output surface (13) and an output region of the combined light ($L_3$) on the combining surface (14) of the branching-combining unit (10) coincide with each other.

5. The optical interferometer (1B, 1E) according to any one of Claims 1 to 4, further comprising a detection unit detecting the combined light ($L_3$) output from the combining surface (14) of the branching-combining unit (10) to the outside.

**Patentansprüche**

1. Optisches Interferometer (1B, 1E), umfassend eine MEMS-basierte Verzweigungs-/Kombinationseinheit (10); ein MEMS-basiertes erstes optisches System (20); ein MEMS-basiertes zweites optisches System (30); und eine MEMS-basierte Antriebseinheit (40), wobei das optische Interferometer (1B) zur Verwendung in infraroter Fourier-Transformationsspektroskopie dient, in der Licht mit einem vorgegebenen Leitstrahldurchmesser verwendet wird, wobei die Verzweigungs-/Kombinationseinheit (10) eine Verzweigungsoberfläche (11), eine Einfallsoberfläche (12), eine Ausgangsoberfläche (13) und eine Kombinationsoberfläche (14) auf einer Grenzfläche zwischen dem Inneren und dem Äußeren eines transparenten Bauteils beinhaltet,

die Verzweigungsoberfläche (11) und die Kombinationsoberfläche (14) getrennt voneinander bereitgestellt sind,

die Verzweigungsoberfläche (11) und die Einfallsoberfläche (12) auf einer gemeinsamen ersten Ebene des transparenten Bauteils bereitgestellt sind, die Ausgangsoberfläche (13) und die Kombinationsoberfläche (14) auf einer gemeinsamen zweiten Ebene des transparenten Bauteils bereitgestellt sind und die erste Ebene und die zweite Ebene parallel zueinander sind,

die Verzweigungsoberfläche (11) teilweise einfallendes Licht ($L_0$) reflektiert, das von außen eintritt, und es als erstes abgezweigtes Licht ($L_{11}$) ausgibt und den Rest des einfallenden Lichts in das Innere als zweites abgezweigtes Licht ($L_{21}$) durchlässt,

die Einfallsoberfläche (12) das erste abgezweigte Licht ($L_{11}$, $L_{12}$), das von der Verzweigungsoberfläche (11) eintritt, über das erste optische System (20) in das Innere durchlässt,

die Ausgangsoberfläche (13) das zweite abgezweigte Licht ($L_{21}$) ausgibt, das von der Verzweigungsoberfläche (11) durch das Innere zur Außenseite reicht,

die Kombinationsoberfläche (14) das erste abgezweigte Licht ($L_{12}$) ausgibt, das von der Einfallsoberfläche (12) durch das Innere zur Außenseite reicht, das zweite abgezweigte Licht ($L_{22}$), das von der Ausgangsfläche über das zweite optische System eintritt, reflektiert und das erste abgezweigte Licht ($L_{12}$) und das zweite abgezweigte Licht ($L_{22}$) kombiniert, um zur Außenseite als kombiniertes Licht ($L_3$) ausgegeben zu werden, und

eine Dicke der Verzweigungs-/Kombinationseinheit (10) so eingerichtet ist, dass kein Lichtstrahl in einem Leitstrahlquerschnitt des zweiten abgezweigten Lichts, das von der Ausgangsoberfläche (13) reflektiert wird, mit einem Lichtstrahl in einem Leitstrahlquerschnitt des zweiten abgezweigten Lichts auf der Verzweigungsoberfläche (11) überlappt,

das erste optische System (20) das erste abgezweigte Licht ($L_{11}$), das von der Verzweigungsoberfläche (11) ausgegeben wird, durch einen oder eine Vielzahl von Spiegeln reflektiert und das Licht ($L_{12}$) zu der Einfallsoberfläche (12) lenkt,

das zweite optische System (30) das zweite abgezweigte Licht ($L_{21}$), das von der Ausgangsoberfläche (13) ausgegeben wird, durch einen oder eine Vielzahl von Spiegeln reflektiert und das Licht ($L_{22}$) zu der Kombinationsoberfläche (14) lenkt,

die Antriebseinheit (40) angepasst ist, beliebige der Spiegel des ersten optischen Systems (20) oder des zweiten optischen Systems (30) zu bewegen, um einen Lichtwegunterschied zwischen dem ersten abgezweigten Licht ($L_{11}$, $L_{12}$) und dem zweiten abgezweigten Licht ($L_{21}$, $L_{22}$) von der Verzweigungsoberfläche (11) zu der Kombinationsoberfläche (14) anzupassen,

die Gesamtzahl der Spiegel im ersten optischen System (20) und der Spiegel im zweiten optischen System (30) eine gerade Zahl ist, und

das optische Interferometer (1) einen Lichtstrahl bei jeder Position in einem Leitstrahlquerschnitt des einfallenden Lichts ($L_0$) auf der Verzweigungsoberfläche (11) abzweigt und dann die Lichtstrahlen bei einer gemeinsamen Position in einem Leitstrahlquerschnitt des kombinierten Lichts auf der Kombinationsoberfläche (14) kombiniert.

2. Optisches Interferometer (1B, 1E) nach Anspruch 1, wobei das erste abgezweigte Licht ($L_{11}$, $L_{12}$) und das zweite abgezweigte Licht ($L_{11}$, $L_{12}$) dieselbe Lichtweglänge in der Verzweigungs-/Kombinationseinheit (10) aufweisen.

3. Optisches Interferometer (1B, 1E) nach Anspruch 1 oder 2, wobei ein Einfallsbereich des einfallenden Lichts ($L_0$) auf der Verzweigungsoberfläche (11) und ein Einfallsbereich des ersten abgezweigten Lichts ($L_{12}$) auf der Einfallsoberfläche (12) der Verzweigungs-/Kombinationseinheit (10) miteinander zusammenfallen.

4. Optisches Interferometer (1B, 1E) nach einem der Ansprüche 1 bis 3, wobei ein Ausgangsbereich des zweiten abgezweigten Lichts ($L_{21}$) auf der Ausgangsoberfläche (13) und ein Ausgangsbereich des kombinierten Lichts ($L_3$) auf der Kombinationsoberfläche (14) der Verzweigungs-/Kombinationseinheit (10) miteinander zusammenfallen.

5. Optisches Interferometer (1B, 1E) nach einem der Ansprüche 1 bis 4, weiter umfassend eine Detektionseinheit, die das kombinierte Licht ($L_3$) detektiert, das von der Kombinationsoberfläche (14) der Verzweigungs-/Kombinationseinheit (10) zur Außenseite ausgegeben wird.

## Revendications

1. Interféromètre optique (1B, 1E) comprenant une unité de division-combinaison à base de MEMS (10) ; un premier système optique à base de MEMS (20) ; un second système optique à base de MEMS (30) ; et une unité d'entraînement à base de MEMS (40), l'interféromètre optique (1B) étant destiné à être utilisé dans une spectroscopie infrarouge à transformée de Fourier dans laquelle de la lumière présentant un diamètre de faisceau prédéterminé est utilisée, dans lequel

l'unité de division-combinaison (10) inclut une surface de division (11), une surface incidente (12), une surface de sortie (13), et une surface de combinaison (14) sur une interface entre l'intérieur et l'extérieur d'un élément transparent,

la surface de division (11) et la surface de combinaison (14) sont fournies séparément,

la surface de division (11) et la surface incidente (12) sont fournies sur un premier plan commun de l'élément transparent, la surface de sortie (13) et la surface de combinaison (14) sont fournies sur un second plan commun de l'élément transparent, et le premier plan et le second plan sont parallèles l'un à l'autre,

la surface de division (11) réfléchit partiellement la lumière incidente ($L_0$) entrant de l'extérieur et la produit en tant que première lumière divisée ($L_{11}$), et transmet le reste de la lumière incidente à l'intérieur en tant que seconde lumière divisée ($L_{21}$),

la surface incidente (12) transmet la première lumière divisée ($L_{11}$, $L_{12}$) entrant depuis la surface de division (11) par l'intermédiaire du premier système optique (20) à l'intérieur,

la surface de sortie (13) produit la seconde lumière divisée ($L_{21}$) arrivant depuis la surface de division (11) à travers l'intérieur vers l'extérieur,

la surface de combinaison (14) produit la première lumière divisée ($L_{12}$) arrivant depuis la surface incidente (12) à travers l'intérieur vers l'extérieur, réfléchit la seconde lumière divisée ($L_{22}$) entrant depuis la surface de sortie par l'intermédiaire du second système optique, et combine la première lumière di-

visée ($L_{12}$) et la seconde lumière divisée ($L_{22}$) à produire vers l'extérieur en tant que lumière combinée ($L_3$), et

une épaisseur de l'unité de division-combinaison (10) est définie de sorte qu'aucun rayon de lumière dans une section transversale de faisceau de la seconde lumière divisée réfléchie par la surface de sortie (13) ne chevauche un rayon de lumière dans une section transversale de faisceau de la seconde lumière divisée sur la surface de division (11),

le premier système optique (20) réfléchit la première lumière divisée ($L_{11}$) produite depuis la surface de division (11) par un ou une pluralité de miroirs, et dirige la lumière ($L_{12}$) vers la surface incidente (12),

le second système optique (30) réfléchit la seconde lumière divisée ($L_{21}$) produite depuis la surface de sortie (13) par un ou une pluralité de miroirs, et dirige la lumière ($L_{22}$) vers la surface de combinaison (14),

l'unité d'entraînement (40) est adaptée pour déplacer l'un quelconque des miroirs du premier système optique (20) ou du second système optique (30) pour ajuster une différence de trajet optique entre la première lumière divisée ($L_{11}$, $L_{12}$) et la seconde lumière divisée ($L_{21}$, $L_{22}$) depuis la surface de division (11) vers la surface de combinaison (14),

le nombre total des miroirs dans le premier système optique (20) et des miroirs dans le second système optique (30) est un nombre pair, et

l'interféromètre optique (1) divise un rayon de lumière à chaque position dans une section transversale de faisceau de la lumière incidente ($L_0$) sur la surface de division (11), et ensuite combine les rayons de lumière à une position commune dans une section transversale de faisceau de la lumière combinée sur la surface de combinaison (14).

2. Interféromètre optique (1B, 1E) selon la revendication 1, dans lequel la première lumière divisée ($L_{11}$, $L_{12}$) et la seconde lumière divisée ($L_{11}$, $L_{12}$) présentent la même longueur de trajet optique dans l'unité de division-combinaison (10).

3. Interféromètre optique (1B, 1E) selon la revendication 1 ou 2, dans lequel une région incidente de la lumière incidente ($L_0$) sur la surface de division (11) et une région incidente de la première lumière divisée ($L_{12}$) sur la surface incidente (12) de l'unité de division-combinaison (10) coïncident l'une avec l'autre.

4. Interféromètre optique (1B, 1E) selon l'une quelconque des revendications 1 à 3, dans lequel une région de sortie de la seconde lumière divisée ($L_{21}$) sur la surface de sortie (13) et une région de sortie de la lumière combinée ($L_3$) sur la surface de combinaison (14) de l'unité de division-combinaison (10) coïncident l'une avec l'autre.

5. Interféromètre optique (1B, 1E) selon l'une quelconque des revendications 1 à 4, comprenant en outre une unité de détection détectant la lumière combinée ($L_3$) produite depuis la surface de combinaison (14) de l'unité de division-combinaison (10) vers l'extérieur.

## Fig.1

# Fig.2

*Fig.3*

**Fig.4**

**Fig.5**

# Fig.6

*Fig.7*

EP 3 321 650 B1

*Fig.8*

# Fig.9

## Fig.10

# Fig.11

**Fig.12**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013504066 A
- JP 5204450 B
- JP 2005003572 A
- JP 2008102132 A
- JP 2008503732 A
- JP 2010170029 A
- JP 2013522600 A
- JP H377029 B

- JP H723856 B
- JP H7139906 B
- JP S6011123 B
- JP S61195317 B
- US 20140098371 A1
- US 6233054 B1
- US 3551054 A